# EUROPÄISCHE PATENTSCHRIFT

(11) **EP 1 078 841 B1**
(45) Veröffentlichungstag und Bekanntmachung des Hinweises auf die Patenterteilung: **15.12.2004**
(21) Anmeldenummer: 00110705.1
(22) Anmeldetag: 19.05.2000
(51) Int. Cl.: B62B 9/14, A47C 7/66

(54) **Verdeck für einen Kinderwagen oder Puppenwagen**
Hood for a perambulator
Capote pour chariot d'enfant

(30) Priorität: 19.08.1999 DE 19938562
(43) Veröffentlichungstag der Anmeldung: 28.02.2001
(73) Patentinhaber: Joh. Georg Hartan, 96242 Sonnefeld (DE)
(72) Erfinder: Hartan, Rolf, 96242 Sonnefeld (DE); Wittig, Reinhard, 96523 Steinach (DE)
(74) Vertreter: Matschkur, Lindner Blaumeier Patent- und Rechtsanwälte

(56) Entgegenhaltungen:
- EP-A- 0 872 400
- US-A- 4 087 885
- US-A- 5 190 390
- US-A- 5 845 666

## Beschreibung

Die Erfindung betrifft ein Verdeck für einen Kinderwagen oder Puppenwagen, mit einer an einem U-Bügel befestigten Abdeckung, wobei der U-Bügel mit jedem seiner Enden an einem am Fahrgestell des Kinderwagens befestigbaren Drehgelenk gehaltert und zum Öffnen oder Schließen des Verdecks um die Gelenkachse verschwenkbar und mittels eines an wenigstens einem Drehgelenk vorgesehenen Rastmechanismus in der jeweiligen Position halterbar ist.

Ein Verdeck der genannten Art wird von der EP-A-0 872 400 gezeigt und kann zwischen einer geschlossenen, den Kinderwagen, gleich wie dieser ausgestaltet ist, oberseitig abdeckenden und schatten- oder windschutzspendenden Stellung und einer offenen Stellung verschwenkt werden. Um das Verdeck in der jeweils gewünschten Position haltern zu können, ist an wenigstens einem der beiden am Kinderwagenrahmen anbringbaren Drehgelenke ein Rastmechanismus vorgesehen, in der Regel ein Verzahnungsmechanismus, der durch entsprechend kräftiges Drücken auf den U-Bügel des Verdecks, der sich von einem Drehgelenk zum anderen erstreckt, schnittweise weitergerastet werden kann. Hierbei kann ein sehr lautes Knarren entstehen, was als nachteilig empfunden wird, da ein im Kinderwagen befindliches Baby oder Kind hierdurch erschrecken oder aufgeweckt werden kann.

Der Erfindung liegt das Problem zugrunde, ein verbessertes Verdeck mit einem Rastmechanismus anzugeben, der ein weitestgehend geräuschloses Verschwenken des Verdecks bei gleichzeitiger Ermöglichung einer Arretierung des Verdecks in einer gewünschten Schwenkposition zulässt.

Zur Lösung des Problems ist ein Verdeck der eingangs genannten Art gemäß dem kennzeichnenden Teil des Anspruchs 1 vorgesehen.

Bevorzugte Weiterbildungen ergeben sich aus den Underansprüchen.

Beim erfindungsgemäßen Verdeck kann der Rasteingriff der Außenverzahnung in die Innenverzahnung des feststehenden Rastabschnitts zum Verschwenken des Verdecks vorteilhaft gelöst werden, d. h., das Rastteil wird aus dem Rasteingriff ausgerückt, so dass der U-Bügel und damit das Verdeck geräuschlos bewegt werden kann. Dies wird auf einfache Weise mittels des längsbeweglich bezüglich des ersten Rastabschnitts geführten, gegen eine Rückstellkraft, insbesondere hervorgerufen durch eine Spiral- oder Blattfeder, beweglichen Rostteils realisiert, welches im Bedarfsfall unter Verwendung eines manuellen Betätigungselements, welches mit dem Rastteil bewegungsgekoppelt ist, aus dem Rasteingriff gerückt werden kann. Nach Erreichen der gewünschten Verschwenkstellung wird das manuelle Betätigungselement einfach losgelassen, so dass das Rastteil rückstellkraftbedingt automatisch wieder in Eingriff mit der Innenverzahnung gedrängt und das Verdeck in der gewünschten Stellung arretiert wird.

Dabei kann gemäß einer ersten Erfindungsausgestaltung das Betätigungselement am Drehgelenk um eine Schwenkachse bewegbar gelagert und mit dem Rastteil über eine Loch-Zapfen-Verbindung bewegungsgekoppelt sein. Selbstverständlich sind auch noch andere Arten der Bewegungskopplung denkbar, beispielsweise kann das Betätigungselement im Falle einer stangenförmigen Ausbildung auch in eine entsprechende Duchbrechung am Rastteil eingreifen, worüber dieses beim Verschwenken des Betätigungselements mitgenommen wird. Alternativ hierzu kann das Betätigungselement am Drehgelenk längsbeweglich geführt und mit dem Rastteil über eine Loch-Zapfen-Verbindung bewegungsgekoppelt sein, wobei die Bewegungsachse des Betätigungselements im Wesentlichen parallel zu der des Rastteils ist. Auch hier sind andere als eine Loch-Zapfen-Verbindung ausgeführte Verbindungen denkbar.

Ist eine Loch-Zapfen-Verbindung zur Bewegungskopplung vorgesehen, so ist zweckmäßigerweise der Zapfen am Rastteil vorspringend angeordnet, und am Betätigungselement ist ein den Zapfen aufnehmendes Loch oder eine entsprechende Durchbrechung vorgesehen. Natürlich kann die Bewegungskopplung auch anders herum sein, derart, dass am Rastteil ein Loch oder eine Eintiefung vorgesehen ist, in die ein am Betätigungselement angeformter Zapfen eingreift. Der Zapfen des bevorzugt aus Kunststoff gefertigten Rastteils sollte zweckmäßigerweise mittels eines eingepressten Metallstifts verstärkt sein, da bedingt durch die Rückstellkraft beachtliche Kräfte zum Ausrücken des Rastteils über den Zapfen aufzubringen sind, so dass durch entsprechende Verstärkung des Zapfens einem Verformen oder Abreißen entgegengewirkt wird.

Gemäß einer konkreten Erfindungsausgestaltung kann das Drehgelenk ein erstes ortsfestes Gelenkteil mit einem das Rastteil aufnehmenden Ring mit der vorzugsweise umlaufenden Innenverzahnung und ein über den U-Bügel schwenkbares zweites Gelenkteil mit einer Führungseinrichtung für das separate Rastteil und einer von dem Zapfen des Rastteils durchsetzten länglichen Durchbrechung aufweisen, an dem an der gegenüberliegenden Seite das Betätigungselement anliegt. Das Rastteil ist bei dieser Ausführungsform bevorzugt vollständig im Inneren des die Innenverzahnung aufweisenden Rings aufgenommen, so dass die Breite des Drehgelenks hinreichend klein gehalten werden kann. Am Rastteil selbst kann eine Aufnahme, vorzugsweise eine Durchbrechung für eine die Rückstellkraft zeugende Feder, beispielsweise eine Spiralfeder, die an einem vorzugsweise zapfenförmigen Gegenlager des zweiten Gelenkteils gegengelagert ist, vorgesehen sein. Eine Ausführung des Drehgelenks aus Kunststoff ist insbesondere in kostentechnischer Sicht vorteilhaft.

Im Hinblick auf eine sichere Arretierung des Verdecks in der gewünschten Stellung sollten an beiden Seiten des Verdecks ein Drehgelenk mit einem Rastmechanismus vorgesehen sein. Da der zum Lösen des Rasteingriffs zu betätigende Lösebügel parallel zum U-Bügel und diesem nahe verläuft, kann mit einer einzigen Handbewegung sowohl der Lösebügel betätigt als auch die Bügel gemeinsam verschwenkt werden. Dabei kann der U-förmige Lösebügel gemäß einer besonders bevorzugten Ausführungsform an der Außenseite der Abdeckung geführt und an den Drehgelenken schwenkgelagert sein, so dass der Lösebügel zum Lösen des Rasteingriffs zum U-Bügel hinzuschwenken ist. Man muss also lediglich mit einer Hand beide Bügel greifen und zusammendrücken, um den Rasteingriff zu lösen und das Verdeck geräuschlos öffnen zu können. Diese Tätigkeit ist mit einer Hand problemlos zu bewerkstelligen, so dass die andere frei bleibt, um beispielsweise den Kinderwagen festhalten zu können u. dgl. Gemäß einer gleichermaßen wirksamen Erfindungsatternative kann der U-förmige Lösebügel an der Innenseite der Abdeckung und im Wesentlichen direkt unterhalb des die Abdeckung tragenden U-Bügels geführt und am Drehgelenk längsbeweglich gelagert sein, so dass der Lösebügel zum Lösen des Rasteingriffs zum U-Bügel heranzuziehen ist. Auch diese Ausgestaltung lässt ein problemloses und einhändiges Bewegen des Lösebügels und Verschwenken der gesamten Mimik zu.

Weitere Vorteile, Merkmale und Einzelheiten der Erfindung ergeben sich aus dem im folgenden beschriebenen Ausführungsbeispiel sowie anhand der Zeichnungen. Dabei zeigen:
- Fig. 1: eine perspektivische Ansicht eines erfindungsgemäßen Verdecks, wobei lediglich die Bügel, nicht aber die Abdeckung im Detail dargestellt ist,
- Fig. 2: eine Sprengzeichnung eines einen Rastmechanismus aufweisenden Drehgelenks,
- Fig. 3: eine Schnittdarstellung des zusammengesetzten, in Fig. 2 gezeigten Drehgelenks,
- Fig. 4A, 4B: zwei Detailansichten der Eingriff- und der Lösestellung des Rastteils, und
- Fig. 5: eine Ansicht zur Darstellung des mit dem Zapfen bewegungsgekoppelten Bereichs des Lösehebels.

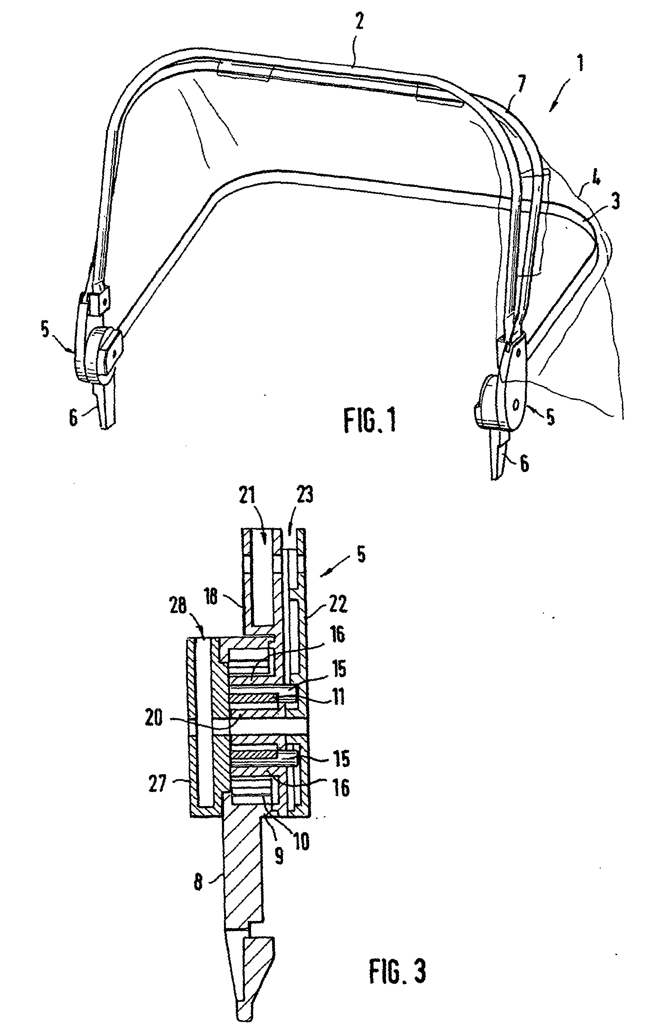

Fig. 1 zeigt ein erfindungsgemäßes Verdeck 1, umfassend einen vorderen U-Bügel 2 und einen hinteren U-Bügel 3, an denen die nur grob dargestellte Stoffabdeckung 4 gehaltert ist. Die beiden U-Bügel 2, 3 sind mit ihren Enden in je einem Drehgelenk 5 aufgenommen, welches wiederum über ein Führungs- und Befestigungsteil 6 an einem Rahmengestell eines Kinderwagens befestigt werden kann. Hierzu wird das Führungs- und Befestigungsteil 6 in eine entsprechende rahmenseitige Aufnahme eingeschoben, wo es beispielsweise mittels eines Rasteingriffs gehaltert ist.

Das Verdeck 1 kann durch Verschwenken des vorderen U-Bügels 2 in Richtung des hinteren U-Bügels 3 ziehharmonikaartig zusammengelegt werden. In der jeweiligen gewünschten und mehr oder weniger offenen Verdeckstellung wird das Verdeck mittels eines in wenigstens einem der Drehgelenke 5 integrierten Rastmechanismus arretiert. Dieser Rastmechanismus ist mittels eines U-förmigen Lösehebels 7 im Bedarfsfall derart betätigbar, dass zwei Verzahnungen des Rastmechanismus bei Betätigung des Lösebügels 7 außer Eingriff gebracht werden können, so dass die gesamte Bügelmimik geräuschlos verschwenkt werden kann. Der Lösehebel 7 erstreckt sich von einem Drehgelenk zum anderen und übergreift die Abdeckung 4 an der Außenseite. Er verläuft im Wesentlichen parallel zum U-Bügel 2.

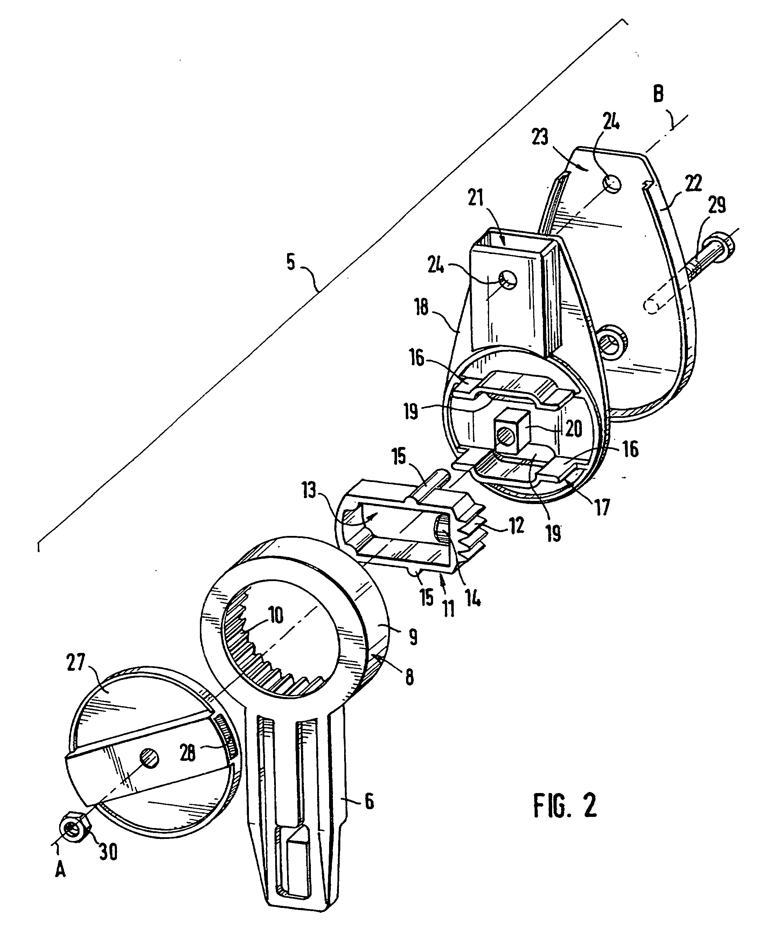

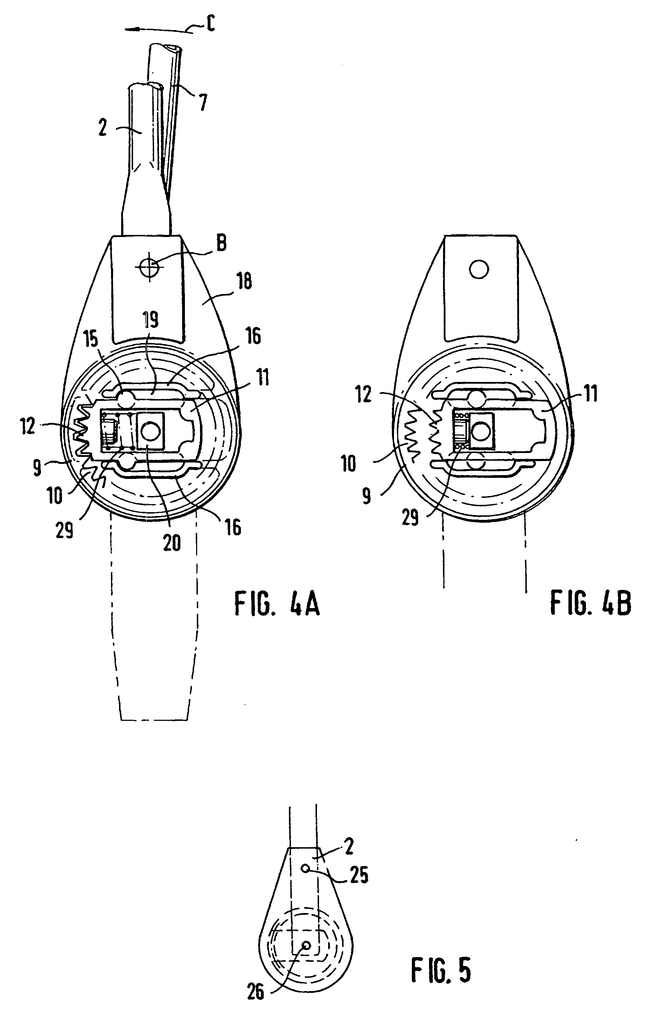

Fig. 2 zeigt im Detail in Form einer Sprengansicht ein Drehgelenk 5. Dieses umfasst ein erstes ortsfestes Gelenkteil 8, an dem das Halte- und Befestigungsteil 6 angeformt ist. Das Drehgelenk 8 zeigt einen Ring 9, an dem eine bevorzugt vollständig umlaufende Innenverzahnung 10 ausgebildet ist. In diesem Ring aufgenommen ist ein Rastteil 11, an dem eine Außenverzahnung 12 ausgebildet ist, die mit der Innenverzahnung 10 kämmt und bei Eingriff für eine Arretierung des U-Bügels 2 in der gewählten Stellung sorgt. Am Rastteil 12 ist eine zentrale Durchbrechung 13 vorgesehen, in die ein Befestigungszapfen 14 für eine eine Rückstellkraft erzeugende Spiralfeder vorspringt. An den langen Seitenwänden des Rastteils 11 sind zwei Zapfen 15 angeformt. Bevorzugt kommen zwei Rastzapfen zum Einsatz, um das Rastteil bezüglich beider spiegelverkehrt aufgebauter Drehgelenke verwenden zu können. Das Rastteil 11 wiederum ist an einer zwei Führungswände 16 aufweisenden Führungseinrichtung 17 eines zweiten Gelenkteils 18 längsverschieblich aufgenommen. Am zweiten Gelenkteil sind Durchbrechungen 19 vorgesehen, durch welche die beiden Zapfen 15 hindurchgreifen und an der anderen Seite des zweiten Gelenkteils 18 austreten. Ferner ist am zweiten Gelenkteil ein Gegenlager 20 in Form eines vorspringenden Gegenlagerzapfens angeformt, welches zum Gegenlagern der am Halterungszapfen 14 angeordneten Spiralfeder dient. Weiterhin weist das zweite Gelenkteil eine Steckaufnahme 21 für den U-Bügel 2 auf. Das zweite Gelenkteil 18 wird während der Verschwenkbewegung des U-Bügels um die zentrale Achse A bezüglich des ortsfesten ersten Gelenkteils 8 gedreht und mit ihm das Rastteil 11. Am zweiten Gelenkteil 18 wird schließlich ein mit diesem verdrehbarer Deckel 22 angeordnet, der eine oberseitige Einführöffnung 23 für das Ende des Lösehebels 7 freilässt. Dieser Lösehebel 7 ist bezüglich des zweiten Gelenkteils mittels einer die Durchbrechungen 24 durchsetzenden Schraubenverbindung, die auch den U-Bügel 2 in einer entsprechenden Durchbrechung durchsetzt, schwenkgelagert, so dass der Lösebügel 7 etwas bezüglich des zweiten Gelenkteils 18 und damit auch bezüglich des an diesem fest und unbeweglich aufgenommenen U-Bügels 2 verschwenkt werden kann. Eine Darstellung des unteren, flachen Endes des ansonsten querschnittlich runden Lösebügels 2 zeigt Fig. 5. Gezeigt ist zum einen die obere Durchbrechung 25, die von der genannten Schraubenverbindung, die die Schwenkachse B bildet, durchsetzt wird. Am unteren Ende ist eine weitere Durchbrechung 26 vorgesehen, in welche der obere Zapfen 15 des Rastteils 11 eingreift. Schließlich ist ein Deckel 27 vorgesehen, mittels welchem der Ring 9 des ersten Gelenkteils 8 abgeschlossen wird. An diesem ist eine Einstecköffnung 28 für den hinteren U-Bügel 3 vorgesehen. Die zusammengesetzte Gelenkverbindung wird mittels einer Durchsteckschraube 29 und einer Kontermutter 30 zusammengehalten.

Fig. 3 zeigt eine Schnittansicht durch eine zusammengesetzte Gelenkverbindung 5. Deutlich erkennbar ist zum einen die Einstecköffnung 28 am Deckel 27, ferner die Einstecköffnung 21 am zweiten Gehäuseteil 18 sowie die Einstecköffnung 23 am hinteren Deckel 22. Der U-Bügel 2 ist in der Einstecköffnung 21 fest aufgenomen, während die Einstecköffnung 23 zur Ermöglichung der kurzen Verschwenkbewegung des Lösebügels 7 etwas breiter bemessen ist. Wie Fig. 3 zeigt ist das Rastteil 11 fast vollständig im Inneren des Rings 9 des ersten Gehäuseteils 8 aufgenommen, so dass die nicht gezeigte Außenverzahnung 12 des Rastteils 11 mit der Innenverzahnung 10 am Ring 9 kämmen kann. Gezeigt sind ferner die Führungswände 14 des zweiten Gehäuseteils 18, längs welcher das Rastteil 11 geführt ist. Die beiden Zapfen 15 - es ist darauf hinzuweisen, dass auch lediglich ein Zapfen ausreichend ist - durchsetzen die entsprechenden Durchbrechungen 19 im zweiten Gehäuseteil und treten zum Deckel hin aus, wo sie bündig mit der Deckelinnenwand des Deckels 22 abschließen. Der obere Zapfen 15 durchsetzt die am eingeführten Lösehebel 7 befindliche Durchbrechung 26 und schließt zur Innenwand des Deckels 22 ab, so dass der Zapfen 15 nicht aus der Durchbrechung 26 herausrutschen kann.

Fig. 4A zeigt die Stellung des Rastteils 11 sowie des U-Bügels 2 und des Lösebügels 7. Das Rastteil 11 ist aufgrund der Rückstellkraft der an diesem und dem Gegenlagerzapfen 20 gelagerten Spiralfeder 29 zur Innenverzahnung 10 des Rings 9 gedrängt, d. h., die Außenverzahnung 12 des Rastteils greift in die Innenverzahnung 10 ein. Hierdurch ist der U-Bügel 2 wie auch der Lösebügel 7, die gemeinsam mit dem zweiten Gelenkteil 8, dem Rastteil 11 und dem Deckel 22 verschwenkbar sind, in ihrer Stellung arretiert. Soll nun das Verdeck geräuschlos verschwenkt werden, wird der Lösehebel 7, der in der bevorzugten Ausführungsform gemäß Fig. 1 benachbart zum U-Bügel 2 an der Außenseite der Abdeckung 4 verläuft, gegriffen und um die Schwenkachse B, die von der bereits erwähnten Schraubenverbindung gebildet wird, in Richtung des Pfeils C zum U-Bügel 2 hingeschwenkt. Das Verschwenken führt dazu, dass das untere Ende des Lösehebels 7 im gezeigten Beispiel gemäß Fig. 4A nach rechts geschwenkt wird. Hierdurch wird aufgrund der Loch-Zapfen-Verbindung das Rastteil 11 von den Führungswänden 16 geführt nach rechts längsverschoben und aus dem Verzahnungseingriff mit der Innenverzahnung 10 gerückt. Der Lösebügel 7 und der U-Bügel 2 liegen nun sehr nahe beieinander. Aufgrund der aufgehobenen Rastarretierung kann nun die aus dem U-Bügel 2 und dem Lösebügel 7 bestehende Bügelmimik mitsamt der Abdeckung 4 beliebig verschwenkt werden. Ist die gewünschte Verschwenkstellung erreicht, wird der Lösehebel 7 entlastet, die infolge des Ausrückens zusammengedrückte Spiralfeder 29 (siehe Fig. 4B) entspannt sich und drückt das Rastteil 11 wieder in die in Fig. 4A gezeigte Eingriffsstellung. Durch die Federkraft wird gleichzeitig der Lösehebel 7 wieder in die Ausgangsstellung zurückgeschwenkt.

## Patentansprüche

1. Verdeck (1) für einen Kinderwagen oder Puppenwagen, mit einer an einem U-Bügel (2) befestigten Abdeckung (4), wobei der U-Bügel (2) mit jedem seiner Enden an einem am Fahrgestell des Kinderwagens befestigbaren Drehgelenk (5) gehaltert und zum Öffnen oder Schließen des Verdecks (1) um die Gelenkachse verschwenkbar und mittels eines an wenigstens einem Drehgelenk (5) vorgesehenen Rastmechanismus in der jeweiligen Position halterbar ist, **dadurch gekennzeichnet, dass** der Rastmechanismus einen ortsfesten, einen Kreis oder Kreisbogen beschreibenden Rastabschnitt mit einer Innenverzahnung (10) und ein bei Verschwenken des U-Bügels (2) bezüglich des ersten Rastabschnitts verschwenkbares Rastteil (11) mit einer mit der Innenverzahnung (10) kämmenden Außenverzahnung (12) umfasst, wobei das Rastteil (11) gegen eine in einen Rasteingriff drängende Rückstellkraft längsbeweglich geführt und zum geräuschlosen Verschwenken des Verdecks mittels eines mit dem Rastteil (11) bewegungsgekoppelten manuellen Betätigungselements aus dem Rasteingriff lösbar ist, wobei als Betätigungselement ein im wesentlichen parallel zum U-Bügel (2) geführter U-förmiger Lösebügel (7) vorgesehen ist, der mit je einem Ende in dem Drehgelenk (5) aufgenommen und zum Lösen des Rasteingriffs zum U-Bügel (2) hin zu bewegen ist.

2. Verdeck nach Anspruch 1, **dadurch gekennzeichnet, dass** der U-förmige Lösebügel (7) an der Außenseite der Abdeckung (4) geführt und an den Drehgelenken (5) schwenkgelagert ist, so dass der Lösebügel (7) zum Lösen des Rasteingriffs zum U-Bügel (2) hinzuschwenken ist.

3. Verdeck nach Anspruch 1, **dadurch gekennzeichnet, dass** der U-förmige Lösebügel an der Innenseite der Abdeckung und im wesentlichen direkt unterhalb des die Abdeckung tragenden U-Bügels geführt und am Drehgelenk längsbeweglich gelagert ist, so dass der Lösebügel zum Lösen des Rasteingriffs zum U-Bügel heranzuziehen ist.

4. Verdeck nach einem der vorangehenden Ansprüche, **dadurch gekennzeichnet, dass** das Betätigungselement am Drehgelenk (5) um eine Schwenkachse (B) bewegbar gelagert und mit dem Rastteil (11)über eine Loch-Zapfen-Verbindung (15, 26) bewegungsgekoppelt ist.

5. Verdeck nach einem der Ansprüche 1 bis 3, **dadurch gekennzeichnet, dass** das Betätigungselement am Drehgelenk längsbeweglich geführt und mit dem Rastteil über eine Loch-Zapfen-Verbindung bewegungsgekoppelt ist, wobei die Bewegungsachse des Betätigungselements im wesentlichen parallel zu der des Rastteils ist.

6. Verdeck nach Anspruch 4 oder 5, **dadurch gekennzeichnet, dass** am Rastteil (11) ein vorspringender Zapfen (15) und am Betätigungselement ein den Zapfen (15) aufnehmendes Loch (26) vorgesehen ist.

7. Verdeck nach Anspruch 6, **dadurch gekennzeichnet, dass** der Zapfen (15) mittels eines eingepressten Metallstifts verstärkt ist.

8. Verdeck nach einem der vorangehenden Ansprüche, **dadurch gekennzeichnet, dass** das Drehgelenk (5) ein erstes ortsfestes Gelenkteil (8) mit einem das Rastteil (11) aufnehmenden Ring (9) mit der vorzugsweise umlaufenden Innenverzahnung (10) und ein über den U-Bügel (2) schwenkbares zweites Gelenkteil (18) mit einer Führungseinrichtung (17) für das separate Rastteil (11) und einer von dem Zapfen (15) des Rastteils (11) durchsetzen länglichen Durchbrechung (19) aufweist, an dem an der gegenüberliegenden Seite das Betätigungselement anliegt.

9. Verdeck nach Anspruch 8, **dadurch gekennzeichnet, dass** das Rastteil (11) eine Aufnahme, vorzugsweise eine Durchbrechung (13), für eine die Rückstellkraft erzeugenden Feder (29), die an einem vorzugsweise zapfenförmigen Gegenlager (20) des zweiten Gelenkteils (18) gegengelagert ist, aufweist.

10. Verdeck nach einem der vorangehenden Ansprüche, **dadurch gekennzeichnet, dass** zur Erzeugung der Rückstellkraft eine Spiralfeder (29) oder eine Blattfeder vorgesehen ist.

11. Verdeck nach einem der vorangehenden Ansprüche, **dadurch gekennzeichnet, dass** das Drehgelenk (5) aus Kunststoff besteht.

12. Verdeck nach einem der vorangehenden Ansprüche, **dadurch gekennzeichnet, dass** an beiden Seiten des Verdecks (1) ein Drehgelenk (5) mit einem Rastmechanismus vorgesehen ist.

13. Kinderwagen oder Puppenwagen, mit einem Verdeck nach einem der vorangehenden Ansprüche.

## Claims

1. Hood (1) for a child's or doll's perambulator, having a cover (4) fixed to a U-shaped hoop (2), the U-shaped hoop (2) being mounted with each of its ends on a hinge (5) fixable to the chassis of the perambulator and being pivotable about the hinge axis for opening and closing of the hood (1) and being holdable in each position by means of a catch mechanism provided on at least one hinge (5), **characterised in that** the catch mechanism comprises a rigid catch section describing a circle or arc having female splining (10) and a catch part (11) which is pivotable relative to the first catch section upon pivoting of the U-shaped hoop (2), the catch part also having male spining (12) which meshes with female splining (10), the catch part (11) being guided longitudinally movably against a restoring force pressing into a catch engagement and being releasable from the catch engagement for the noiseless pivoting of the hood by means of a manual actuating element (7) coupled movingly to the catch part (11), wherein a U-shaped release hoop (7) is provided guided substantially parallel to the U-shaped hoop (2) and is received by each end in the hinge (5) and is to be moved towards the U-shaped hoop (2) in order to release the catch engagement.

2. Hood according to claim 1, **characterised in that** the U-shaped release hoop (7) is guided on the exterior of the hood (4) and is pivotably mounted on the hinges (5) so that the release hoop (7) has to be pivoted towards the U-shaped hoop (2) in order to release the catch engagement.

3. Hood according to claim 1, **characterised in that** the U-shaped release hoop is guided on the inside of the cover and substantially directly below the U-shaped hoop supporting the cover and is mounted with longitudinal movement on the hinge in such a manner that the release hoop has to be drawn up to the U-shaped hoop in order to release the catch engagement.

4. Hood according to one of the preceding claims, **characterised in that** the actuating element is mounted on the hinge (5) movably about a pivotal axis (B) and is coupled movably to the catch part (11) via a hole-and-pin connection (15, 26).

5. Hood according to one of claims 1 to 3, **characterised in that** the actuating element is guided with longitudinal movement on the hinge and is coupled movably to the catch part via a hole-and-pin connection, wherein the axis of movement of the actuating element is substantially parallel to that of the catch part.

6. Hood according to claim 4 or 5, **characterised in that** a projecting pin (15) is provided on the catch part (11) and a hole (26) receiving the pin (15) is provided on the actuating element.

7. Hood according to claim 6, **characterised in that** the pin (15) is reinforced by means of a metal rod inserted by pressure.

8. Hood according to one of the preceding claims, **characterised in that** the hinge (5) has a first rigid hinge part (8) with a ring (9) receiving the catch part (11) and having the preferably continuous female splining (10), and further has a second hinge part (18) pivotable via the U-shaped hoop (2) comprising a guide device (17) for the separate catch part (11) and an elongate perforation (19) penetrated by the pin (15) of the catch part (11), which pin the actuating element abuts on the opposite side.

9. Hood according to claim 8, **characterised in that** the catch part (11) has a seat, preferably a perforation (13), for a spring (29) which generates the restoring force and which abuts a preferably pin-shaped abutment (20) of the second hinge part (18).

10. Hood according to one of the preceding claims, **characterised in that** in order to generate the restoring force a spiral spring (29) or a leaf spring is provided.

11. Hood according to one of the preceding claims, **characterised in that** the hinge (5) consists of plastics material.

12. Hood according to one of the preceding claims, **characterised in that** a hinge (5) with a catch mechanism is provided on both sides of the hood (1).

13. Child's or doll's perambulator having a hood according to one of the preceding claims.

## Revendications

1. Capote (1) pour une voiture d'enfant ou une voiture de poupée, du type se composant d'un recouvrement (4) fixé à un arceau en U (2), l'arceau en U (2) étant maintenu par chacune de ses extrémités à une articulation pivotante (5), fixable au châssis de la voiture d'enfant et basculable autour de l'axe de pivotement pour l'ouverture ou la fermeture de la capote (1) et pouvant être maintenue dans toute position voulue au moyen d'un mécanisme d'arrêt prévu sur au moins une articulation pivotante (5), **caractérisée en ce que** le mécanisme d'arrêt comprend une section d'arrêt fixe décrivant un cercle ou un arc de cercle et présentant une denture intérieure (10) et un organe d'arrêt (11) basculable par rapport à la première section d'arrêt, et présentant une denture extérieure (12) engrenant avec la denture intérieure (10), l'organe d'arrêt (11) étant guidé mobile longitudinalement à l'encontre d'une force de rappel la repoussant dans une griffe d'arrêt et pouvant être dégagé de la griffe d'arrêt au moyen d'un élément manuel d'actionnement couplé dans son déplacement avec la portion d'arrêt pour le basculement sans bruit de la capote, un arceau de dégagement (7) en forme de U et guidé pratiquement parallèlement à l'arceau en forme de U (2) étant prévu comme élément d'actionnement et étant accueilli par une extrémité dans l'articulation pivotante (5) et déplacé vers l'arceau en U (2) pour le dégagement de la section d'arrêt.

2. Capote selon la revendication 1, **caractérisée en ce que** l'arceau de dégagement (7) en forme de U est guidé sur le côté extérieur du recouvrement (4) et est monté basculant sur l'articulation pivotante (5) de manière telle que l'arceau de dégagement (7) soit déplacé vers l'arceau en U (2) pour le dégagement de la section d'arrêt.

3. Capote selon la revendication 1, **caractérisée en ce que** l'arceau de dégagement en forme de U est guidé sur le côté intérieur du recouvrement et pratiquement directement au-dessous de l'arceau en U portant le recouvrement et est monté mobile longitudinalement sur l'articulation pivotante de manière telle que l'arceau de dégagement soit extrait pour le dégagement de la griffe d'arrêt.

4. Capote selon l'une quelconque des revendications précédentes, **caractérisée en ce que** l'élément d'actionnement est monté sur l'articulation pivotante (5) autour d'un axe de basculement et est associé en déplacement avec l'organe d'arrêt (11) par l'intermédiaire d'une liaison à cheville/trou (15, 26).

5. Capote selon l'une quelconque des revendications 1 à 3, **caractérisée en ce que** l'élément d'actionnement est guidé en déplacement longitudinal sur l'articulation pivotante et est couplé en déplacement avec l'organe d'arrêt par l'intermédiaire d'une liaison cheville/trou, l'axe de déplacement de l'élément d'actionnement étant pratiquement parallèle à l'organe d'arrêt.

6. Capote selon l'une des revendications 4 ou 5, **caractérisée en ce que** sur l'organe d'arrêt (11) est prévue une cheville en relief (15) et sur l'élément d'actionnement est prévu un trou (26) accueillant la cheville (15).

7. Capote selon la revendication 6, **caractérisé en ce que** la cheville (15) est renforcée au moyen d'une goupille métallique enfoncée à force.

8. Capote selon l'une quelconque des revendications précédentes, **caractérisée en ce que** l'articulation pivotante (5) comporte une première pièce d'articulation immobile (8) présentant une bague (9) accueillant l'organe d'arrêt (11) avec la denture intérieure de préférence périphérique (10) et une seconde pièce d'articulation (18) basculable par l'intermédiaire de l'arceau en U (2), présentant un système de guidage (17) pour l'organe d'arrêt séparé (11) et un passage longitudinal (19) de traversée de la cheville (15) sur lequel s'appuie le côté opposé de l'élément d'actionnement.

9. Capote selon la revendication 8, **caractérisée en ce que** l'organe d'arrêt (11) présente un moyen de réception, de préférence une traversée (13), pour un ressort (29) exerçant une force de rappel qui repose contre un contre-appui (20), de préférence en forme de cheville de la seconde pièce d'articulation.

10. Capote selon l'une quelconque des revendications précédentes, **caractérisée en ce que** pour exercer la force de rappel il est prévu un ressort spiral (29) ou un ressort à lame.

11. Capote selon l'une quelconque des revendications précédentes, **caractérisée en ce que** l'articulation pivotante (5) est réalisée en matière plastique.

12. Capote selon l'une quelconque des revendications précédentes, **caractérisée en ce que** sur les deux côtés de la capote (1) est prévue une articulation pivotante (5) avec un mécanisme d'arrêt.

13. Voiture d'enfant ou voiture de poupée comportant une capote selon l'une quelconque des revendications précédentes.
